(19) Europäisches Patentamt

European Patent Office

Office européen des brevets

(11) **EP 4 647 913 A1**

(12) **EUROPEAN PATENT APPLICATION**

(43) Date of publication:
**12.11.2025 Bulletin 2025/46**

(21) Application number: **24174540.5**

(22) Date of filing: **07.05.2024**

(51) International Patent Classification (IPC):
*G06F 9/50* *(2006.01)*

(52) Cooperative Patent Classification (CPC):
**G06F 9/5077; G06F 9/5072**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Siemens Aktiengesellschaft
80333 München (DE)**

(72) Inventors:
• **Deric, Nemanja
80807 München (DE)**
• **Varastehhajipour, Amir
81379 München (DE)**

(74) Representative: **Siemens Patent Attorneys
Postfach 22 16 34
80506 München (DE)**

(54) **SYSTEM FOR CONTROLLING A FIELD DEVICE, METHOD TO OPERATE A SYSTEM FOR CONTROLLING A FIELD DEVICE AND METHOD TO CONFIGURE A SYSTEM FOR CONTROLLING A FIELD DEVICE**

(57) The invention relates to a system (1) for controlling a field device (2), wherein the system (1) comprises a server pool (6) comprising servers for operating instances of a virtual control application; the system (1) comprises a network proxy device (23), configured to receive a status update message from the field device (2), comprising status data, and to send replicated status update messages comprising the status data to each instance of the virtual control application assigned to the field device (2); the network proxy device (23) is configured to receive respective control response messages of each of the instances of the virtual control application and to perform a consensus-based decision making procedure to evaluate consensus control data based on the control data provided by the instances of the virtual control application and to send a control response message comprising the consensus control data to the field device (2).

FIG 6

## Description

The invention is concerned with a system for controlling a field device, a method to operate a system for controlling a field device and a method to configure a system for controlling a field device.

In the future, with the rise of IT/OT converged infrastructure, industrial control services are expected to be deployed as virtualized software applications, like vPLCs, running on general-purpose hardware. While this approach offers advantages in flexibility and scalability, it also introduces challenges to achieve high reliability (as compared to the hardware solutions). Software applications, unlike traditional hardware-based systems, are inherently less reliable and can encounter failures due to a range of factors. These include software failures such as memory leakage, failures within the virtualization layer, networking node failures, handling corrupted packets, and server hardware failures. The reliance on software in industrial settings poses a risk of factory downtime and operational disruptions. Therefore, it is crucial to focus on designing, developing, and implementing new reliability mechanisms that cater to the unique requirements of industrial applications. By enhancing the reliability and availability of these applications, we can effectively reduce factory downtime and ensure the continuous productivity and stability of industrial operations in the future.

The reliability/high-availability mechanisms for virtualized and/or containerized IT/OT converged infrastructure are currently lacking. On the one hand, classical industrial networking systems like PROFINET offer some solutions to enhance reliability. However, these solutions assume that control applications are implemented as hardware devices, such as PLCs. Therefore, they are not available yet for the virtualized and containerized industrial applications found in IT/OT converged infrastructure.

On the other hand, the IT world provides various reliability and high-availability solutions. Unfortunately, these solutions do not meet the specific requirements of the industrial sector, such as zero downtime in case of container or VM failure or/and enhanced resilience. For instance, renowned cloud container platforms like Kubernetes achieves high-availability by running multiple replicas (containers/pods) simultaneously. In the event of a failure, the traffic or load is seamlessly shifted from the faulty container/virtual machine to another fully prepared replicated. Nevertheless, while these approaches generally enhance reliability, they may occasionally result in brief downtime during the migration process, especially, since these methods are often reactive.

Therefore, it is crucial to explore novel approaches that ensure seamless high-availability with zero downtime in industrial scenarios which utilized virtualization and containerization technologies/environments.

It is therefore an objective of the present invention to provide a solution that allows reliable control of field devices by virtual control applications.

This objective is achieved by the respective subject matter of the independent claims. Further implementations and preferred embodiments are subject matter of the dependent claims.

A first aspect of the present invention is related to a system for controlling a field device. The system comprises a server pool comprising servers. The servers are configured to operate virtual control applications assigned to the field device. The virtual control applications are configured to control the field device. The server pool is configured to operate the virtual control applications in parallel. In other words, the server pool is configured to operate multiple instances of a same virtual control application that is configured to control the field device in parallel.

The system comprises a network proxy device for a network. The network proxy device is configured to receive a status update message from the field device comprising status data related to a status of the field device. The network proxy device is configured to send replicated status update messages of the status update message comprising the status data to the instances of the virtual control application assigned to the field device.

In other words the field device is configured to send the status update message comprising status data to the network proxy device. The status data may comprise data necessary for control device to control the field device. In contrast to the state of the art, the status update message is provided to the network proxy device instead of a control device or the virtual control application. To provide the status data to each of the instances of the virtual control application, the network proxy device generates the replicated status update messages comprising the status data and sends the replicated status update messages to each of the instances of the virtual control application assigned to the field device.

The instances of the virtual control application assigned to the field device are configured to receive the replicated status update messages from the network proxy device. Each instance of the virtual control application is configured to evaluate control data based on the status data. As each of the instances of the virtual control application operates the same virtual control application, and receives the same status data, each of the instances is expected to provide the same control data. The instances of the virtual control application are configured to provide the control data to the network proxy device in respective control response messages.

The network proxy device is configured to receive the control response messages from the instances of the virtual control application. The network proxy device is configured to perform a consensus-based decision-making procedure to evaluate consensus control data based on the control data. In other words, the network proxy device is configured to evaluate the consensus control data based on the control data provided by each instance of the virtual control application. The aim of the step is to evaluate reliable control data. The step may be necessary as a corrupted instance of the virtual control application may provide corrupted control data. The network proxy device is configured to compare the control data provided by the instances of the virtual control application in the consensus-based decision-making procedure. If each of the control data provided by the instances of the virtual control application are consistent, the consensus control data may be the same as each of the control data. If at least one of the control data is not consistent with the control data provided by the other instances, the consensus-based decision-making procedure may select the consistent control data of the control data as the consensus control data. The network proxy device is configured to send a control response message comprising the consensus control data to the field device.

The field device is configured to receive the control response message and to operate according to the consensus control data.

The advantage of the invention is that the field device can be seamlessly controlled by a virtual control application.

According to a further embodiment of the invention, the network proxy device is configured to determine the control data as the consensus control data when the control data of each of the respective control response messages are consistent. In other words, when the control data provided by each instance of the virtual control application are the same, the control data are provided to the field device as a consensus control data.

According to a further embodiment of the invention, the network proxy device is configured to determine the control data of the majority of the respective control response messages as the consensus control data when the control data of at least one of the control response messages is not consistent with the other control data. In other words, it may be possible that the control data provided by the respective whirlpool control device is are inconsistent. In that case the network proxy device evaluates the majority of the respective can control data as the contents control data.

According to a further embodiment of the invention, the network proxy device is configured to block the transmission of the control response message if the consensus-based decision-making procedure fails. In other words, the network proxy device is configured not to provide the control response message to the field device when the network proxy device is unable to evaluate the consensus control data. It may be possible that each of the control response messages comprises different control data that may be inconsistent. In that case, it may not be possible to evaluate the consensus content control data. To avoid a provision of incorrect consensus control data to the field device, the network proxy device does not provide the control response message.

According to a further embodiment of the invention, the network proxy device is configured to provide an error message when the control data of the respective control response messages are inconsistent and/or when the consensus -based decision-making procedure fails. In other words, the network proxy device provides the error message when the control data provided by the respective control applications are not consistent and/or when the network proxy device is not able to evaluate the consensus control data in the consensus -based decision-making procedure. The embodiment has the advantage, that an operator may initiate new instances of the virtual control application or may reconfigure current instances of the virtual control application or servers operating the instances of the virtual control application.

According to a further embodiment of the invention, the system comprises an orchestrator module. The orchestrator module is configured to receive an intent request message comprising an intent for operating virtual control applications for the field device. The orchestrator module is configured to control the server pool to set up instances of the virtual control application assigned to the field device according to the intent. The orchestrator module is configured to control the network to connect the instances of the virtual control application to the field device via the network proxy device. The orchestrator module is configured to configure a proxy configuration of the network proxy device as a function of the instances of the virtual control application assigned to the few device. The proxy configuration describes the field device instances of the virtual control application assigned to the field device and the field device. Therefore the network proxy device knows addresses of the instances of the virtual control application to which the replicated status update messages have to be provided and from which the control messages are expected and the field device providing the status update messages and receiving the consensus control messages. The embodiment has the advantage that a provision of the instances of the virtual control applications and the configuration of the network and the network proxy is performed by a device.

A second aspect of the present invention is related to a method to operate a system for controlling a field device. The method comprises the following steps.

The method comprises a step of receiving a status update message from the field device, comprising status data, by a network proxy device of the system. A next step comprises sending replicated status update messages comprising the status data to each instance of a virtual control application assigned to the field device operated by servers of a server pool in parallel. A next step comprises evaluating control data based on the status data by each of the instances of the virtual control application and sending respective control response messages comprising the control data to the network proxy device. A next step comprises receiving by the network proxy device the control response messages of each of the instances of the virtual control application and performing a consensus-based decision making procedure to evaluate consensus control data based on the control data provided by the instances of the virtual control application. A next step comprises sending a control response message comprising the consensus control data to the field device by the network proxy device.

A third aspect of the present invention is related to a method to configure a system for controlling a field device. The method comprises the following steps.

The method comprises a step of receiving an intent request message comprising an intent to control the field device with a virtual control application by an orchestrator module. A next step comprises controlling by the orchestrator module the server pool to set up instances of the virtual control application assigned to the field device as a function of the intent. A next step comprises controlling by the orchestrator module the network to connect the instances of the virtual control application to the field device via the network proxy device. A next step comprises configuring a proxy configuration of the network proxy device to assign the instances of the virtual control application to the field device.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

Independent of the grammatical term usage, individuals with male, female or other gender identities are included within the term.

In the following, the invention will be explained in detail with reference to specific exemplary implementations and respective schematic drawing. In the drawing, identical or functionally identical elements may be denoted by the same reference signs.

In the figures,

FIG 1      shows a system for controlling a field device according to the state of the art;

FIG 2      shows a sequence diagram of an admission phase of a method for controlling a field device according to the state of the art;

FIG 3      shows a failure detection in a system for controlling a field device according to the state of the art;

FIG 4      shows a failure reaction in a system for controlling a field device according to the state of the art;

FIG 5      shows a sequence diagram of a failure detection and reaction in a system for controlling a field device according to the state of the art;

FIG 6      shows a system for controlling a field device;

FIG 7      shows a method of operating a system for controlling a field device;

FIG 8      shows a method of operating a system for controlling a field device;

FIG 9      shows a method of operating a system for controlling a field device; and

FIG 10     shows a method of operating a system for controlling a field device.

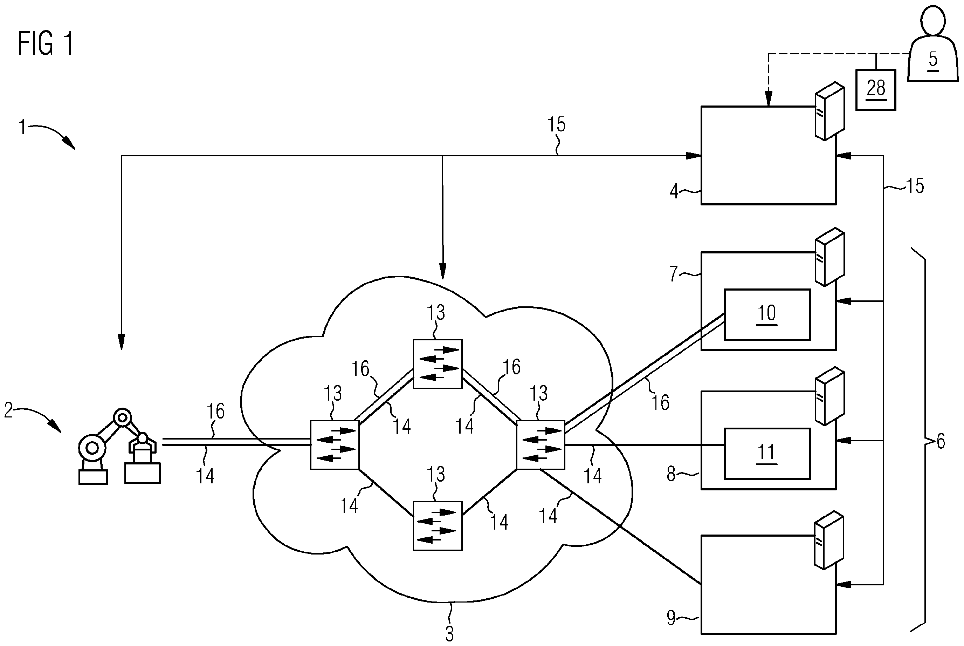

FIG 1 shows a system 1 for controlling a field device 2 according to the state of the art.

The system 1 may comprise one or more field devices 2. The field devices 2 may be devices such as sensors, actuators, or robot arms. The field devices 2 typically send periodically or cyclic, e.g., every 10ms, status update messages 20 to a control application ,e.g., over protocol/standard such as OPC-UA, PROFINET or TSN. These status update messages 20 contain information such as a field device 2 position, sensor data values such as a current measured temperature or a current arm position that may varies in different scenarios.

The system 1 may comprise a plant operator 5. The plant operator 5 may represent the engineer that may provide intent request message 28 comprising intents and requirements of the network 3 and the control applications to an orchestrator module 4. An interface between these two entities is either implemented as a GUI, or as an API. By using this interface, the plant operators 5 may specify intents and requirements. For example, the plant operators 5 may clarify what field devices 2 they wish to control and with what control applications. Moreover, the plant operators 5 may specify communication and reliability requirements.

The system 1 may comprise a server pool 6 comprising a set of servers 7, 8, 9 comprising worker nodes or hardware servers. These servers 7, 8, 9 may be used to host industrial control application such as vPLCs in forms of containers or VMs with real-time properties.

The system 1 may comprise a network 3. The network 3 may connect the field devices 2 with the Server Pool 6. The network 3 may comprise multiple sub-networks, e.g., L2, L3, VXLAN, or PROFINET-based, and it may contain multiple types of networking devices. The network 3 may provide deterministic performance e.g., via PROFINET or TSN. In the state-of-the-art, the network 3 may comprise forwarding switches 13 that may be defined as below. Forwarding switches 13 may provide only the basic connectivity or packet forwarding, e.g., based on the deployed protocol. For example, they forward packets based on their MAC or IP addresses.

The system 1 may comprise an orchestrator module 4. It may comprise the following two modules and functionalities. A user Interface 17 of the orchestrator module 4 may provide interfaces/APIs, e.g., web, or REST to the plant operator 5 for receiving the intent request messages 28. Also, the user interface 17 may forward the information to the other modules of the orchestrator module 4, as well as showing system status/alert/events to the plant operator 5.

A service manager 18 of the orchestrator module 4 may coordinate steps between components to embed the intent of the intent request message 28. It may have interfaces/APIs with the user interface 17, an application and network controller 19 19, and other modules.

The application and network controller 19 of the orchestrator module 4 may orchestrate and configure the field device 2, the server pool 6 and the network devices of this architecture based on the specified intents and requirements provided by the plant operator 5. In detail, it may perform the below functionalities:
Server pool configuration: The application and network controller 19 of the orchestrator module 4 may create a pre-defined number of instances of the control application 10, 11 in the server pool 6. To provide high-availability, it may create multiple identical replicas of the control application as active-passive redundancy. This means that, only one instance 10 of the control application is active at the same time per field device 2. In case of failure, one of the passive instances 11 will take over the control.

Network configuration: The application and network controller 19 of the orchestrator module 4 may configure the network 3 to provide connectivity between control applications and field devices 2. That is, if necessary, networking devices and network proxy devices 23 are configured to establish connectivity between field devices 2 and containers/VMs hosting control applications.

Field device configuration: The field device configuration may comprise networking configuration on field devices 2 to establish connection to the network 3 and network proxy device 23. By doing so, the connectivity between field devices 2 and instances of the control application 10, 11 is established.

In the problem setting, an intent request message 28 arrives to the orchestrator module 4 during runtime. This request has a 4-tuple characteristic: (s, $t$, $b$, $d$) where $s$ denotes a source node, e.g., field device 2 in a factory), $t$ denotes a control application type e.g., vPLC type $t$, $b$ denotes the requested data rate e.g., in Mbps, $d$ stands for end-to-end delay e.g., in ms. As it is shown in Fig. 1, based on the intent requirements, the orchestrator module 4 must first find a server 7, 8, 9 in the server pool 6 (i.e., industrial edge cloud) to host two instances of the control application type $t$ in form of a container or VM with active-passive redundancy. The orchestrator module 4 may then configure the server pool 6 using a control plane 15 connection to run a control application virtual instance 10. Secondly, the orchestrator module 4 may configure the network 3 for routing, connecting the field devices 2 to the instance of the control application 10. Again, the forwarding switches 13 and servers 7, 8, 9 are configured via the control plane 15 of the network 3.

Finally, the communication between the field device 2 and the instance 10 of the control application may start.

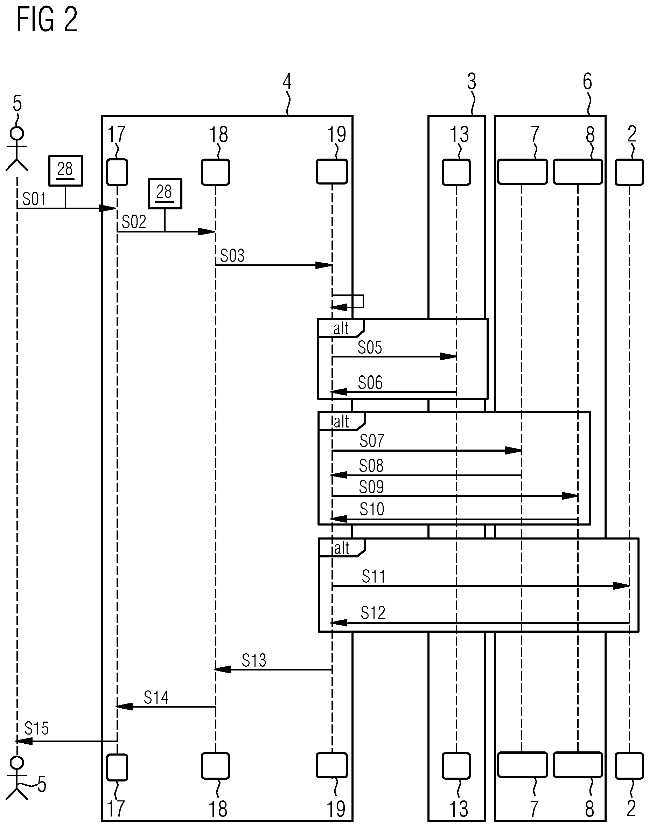

FIG 2 shows a sequence diagram of an admission phase of a method for controlling a field device according to the state of the art.

At a step S01, the plant operator 5 may submit the intent request message 28, comprising the intent request to the user interface 17 of the orchestrator module 4,e.g., through a web interface.

After that, in step S02, the user interface 17 of the orchestrator module 4 may forward the intent request to the service manager 18 in the orchestrator module 4.

At step S03, service manager 18 may send an intent embedding request to the application and network controller 19.

In step S04 application and network controller 19 may process the intent request and may find a server 7 to host the instance of the virtual control application 10, and a networking path based on the intent QoS requirements (bandwidth and delay).

After that, in step S05 the application and network controller 19may configure the network 3, for example the forwarding switches 13, to setup the network path.

Then in step S06, the forwarding switch 13 may confirm the successful network configuration.

In next steps S07 to S10, the application and network controller 19runs the necessary number of instances 10, 11 of the control application (e.g., vPLCs) in the server pool 6. In the example two instances 10, 11 of the control application may be used. Thus, in steps S07-S08, the application and network controller 19 may run the instance of the control application one, called first instance of the control application 10 on a first server 7 in the server pool 6. Similarly, in steps S09-S10, application and network controller 19 may run the second instance of the control application 11 of the same application on the second server 8 in the server pool 6.

Finally, in step S11, the application and network controller 19 may configure the field device 2. In step S12, the field device 2 may confirm the successful configuration. At this stage, application and network controller 19 may notifie the plant operator 5 through service manager 18 and user interface 17 in steps S13- S15 for a successful serving of the intent request.

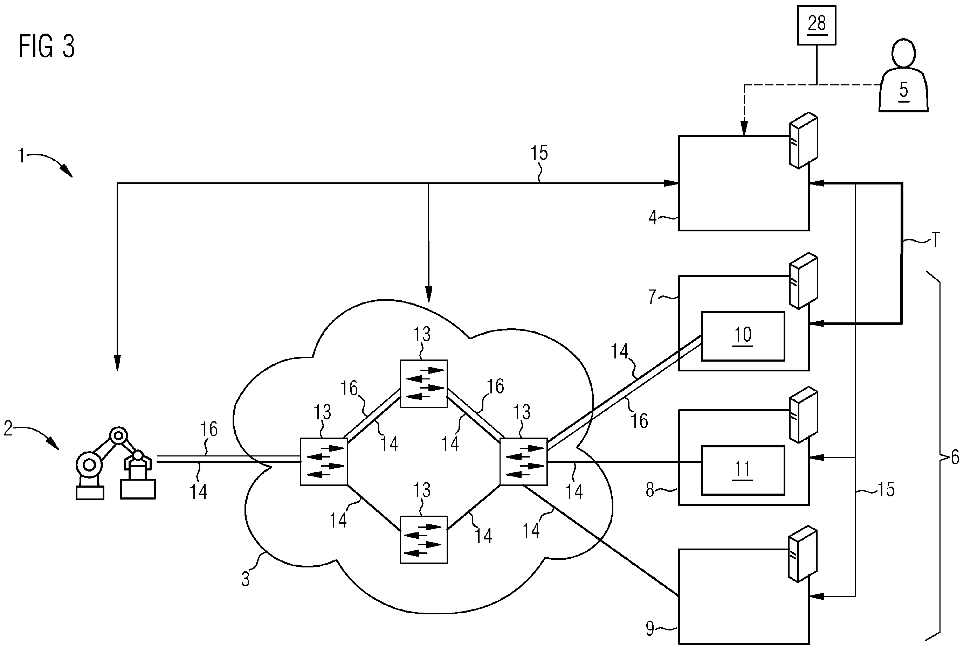

FIG 3 shows a failure detection in a system for controlling a field device according to the state of the art.

A high-availability mechanism of the state-of-the- art are shown ing Fig 3. These two instances of the control application 10, 11 may run in an active-passive manner, meaning that if first instance of the control application 10 fails, second instance of the control application 11 takes over the operation. The state of these two instances 10, 11 is synchronized during the operation. Also, the health of these instances 10, 11 is checked periodically by the orchestrator module 4. In case of a failure of an instance 10, the second instance 11 will take over the operation.

FIG 3 shows the scenario when a failure happens in first instance of the control application 10. When the heartbeat of the first instance of the control application 10 cannot be received by the orchestrator module 4, the failover mechanism is triggered. The lack of heartbeat usually means that the instance 10 is not running anymore, runtime errors are undetected.

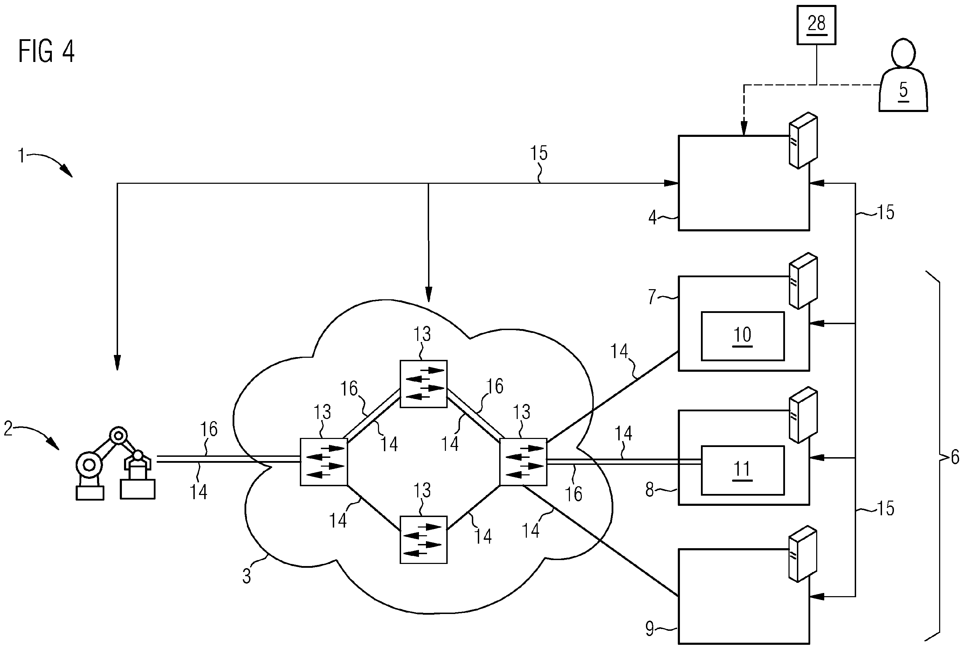

FIG 4 shows a failure reaction in a system for controlling a field device according to the state of the art.

Then, in Fig. 4, the failure reaction is performed,e.g., configuring a new network 3 path, and second instance of the control application 11 takes over the operation.

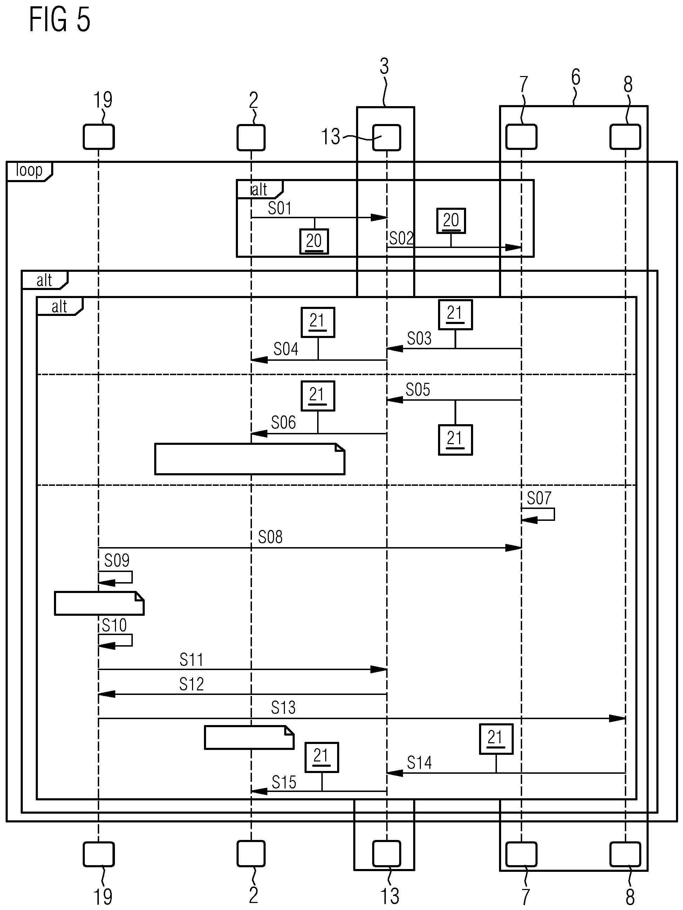

FIG 5 shows a sequence diagram of a failure detection and reaction in a system for controlling a field device according to the state of the art.

In this example, first instance of the control application 10 may be the active instance of the control application, and second instance of the control application 11 may be the passive one. A closed-loop control application is considered where in steps S01-S02, the field device 2 sends status update message 20 "S" to the control application through the network 3 through forwarding switches 13. In this case, three scenarios may happen. Receiving no control message 21 or any other reply than "C" may be considered incorrect/failure.

In case of a successful response after first instance of the control application 10 processes the status update message 20 received from the field device 2, it may send a control message 21 "C" to the field device 2 device through the network 3 through forwarding switch 13 in steps S03- S04.

In case of a software bug/failure, the container instance for first instance of the control application 10may be running the heartbeat is OK, however, in this case, the first instance of the control application container 10 may produce a malformed/incorrect control message 21 "D" (steps S05-S06). This packet may carry incorrect payload as a result of a bug in the software stack of the control application, or the container management system 1 such as virtual switch, or the virtualization layer. Unfortunately, in this case, this failure may remain undetected since the heartbeat mechanism may only support failures in the container running status. Thus, the field device 2 may receive a wrong/malformed/meaningless control message 21 from the instance of the control application 10 which could stop its operation and reduce the system reliability/availability.

In a case of a container failure, a failure may happen to the container itself, which may cause the container stop running, e.g., the CPU of the physical server stops working. Here, after some time, depending on the heartbeat checking frequency, the application and network controller 19 may check the heartbeat of first instance of the control application 10 in step S08. However, it will not receive the heartbeat reply from first instance of the control application 10. In this case, application and network controller 19 will raise an alarm for not detecting the heartbeat of first instance of the control application 10 (step S08). Now that the failure is detected, it is time for reacting to it. In step S10, the application and network controller 19 may calculate how to react. In steps S11-S12 the application and network controller 19 may setup a new network path to second instance of the control application 11 and may run the service in a second server 8 in step S13.

Finally, the control message 21 "C" could be transferred to the field device 2 at step S14 and S15. However, in this case, there is a service downtime from the point the first instance of the control application 10 fails until second instance of the control application 11 is sending the control message 21 "C" to the field device 2. This long downtime is not desired and can cause dysfunctionality of field device 2 and breaking the production line.

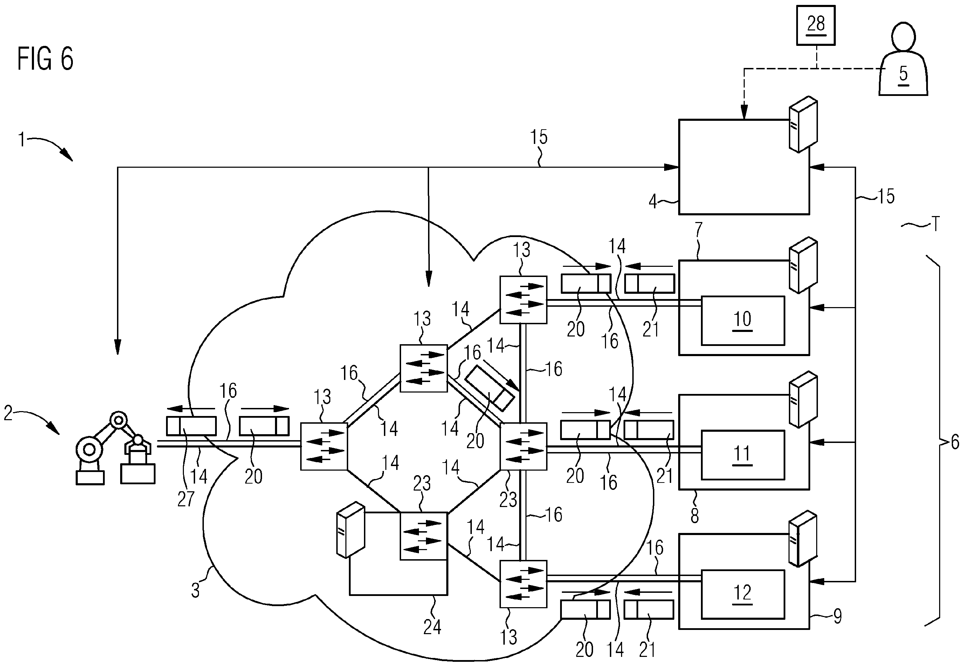

FIG 6 shows a system for controlling a field device.

In this approach, a novel architecture/concept designed to achieve high-availability in virtualized/containerized industrial environments, such as remote control scenarios where there is a hardware field device 2/field device 2 and virtualized/containerized control application controlling the field device 2 is presented. The architecture assumes deterministic or predictable behavior of control applications/vPLCs, and it achieves high-availability by deploying multiple containers or Virtual Machines (VMs) that house duplicated control plane 15 applications. All the deployed containers are running in parallel and maintain the same state and try to communicate with the field devices 2.

To resolve the communication demands of replicated traffic that is exchanged between field devices 2 and multiple replicated containers 10, 11, 12, it relies on an enhanced network proxy device 23. This network proxy device 23 may be implemented on programmable in-network devices (e.g., using P4 language), Smart-NICs, or as high- performance containers/VMs running on servers 24, ensuring fast data exchange.

By employing this approach, plant operators 5 gain the advantage of uninterrupted connections and control application operations, even in the face of multiple container failures running control applications. The solution realizes high-available virtualized services for critical industrial systems 1 with zero-downtime in case of vPLC and infrastructure software failures.

A system 1 and methods for embedding an intent as a machine-to-controller communication with a seamless high-availability/redundancy (zero downtime) is provided. In this situation, the intent request may also contain additional requirements for the service reliability, denoted by *a* (e.g., 99.9999%). Therefore, the intent request in the intent request message 28 may become a 5-tuple as (*s, t, b, d, a*).

The proposed architecture is presented in FIG 6. The figure depicts a common scenario found in an industrial factory. In this scenario, the network 3 is a deterministic network 3 (e.g., TSN or reference), and control applications may run with real-time properties, hence, the packet exchanged by the field devices 2 and applications are never lost from algorithmic point of view. The network traffic may be replicated in the network 3 towards each instance of the control application 10, 11, 12, running on the server pool 6. Later, the duplicated traffic may form a consensus algorithm by utilizing in-network 3 processing capabilities to identify possible corrupted packets in the networks 3 and establish the flows using the correct packet payloads.

In addition to the components from state-of-the-art, the system 1 comprises the following major components.

A control application availability component 26 of the orchestrator module 4. Based on the availability requirements of the intent (i.e., parameter *a*), this module may determine how many instances of the control application must be run in parallel in the server pool 6 to ensure the user requirement. This component may have an interface to the application and network controller 19. To provide high- availability, according to the output of the control application availability component 26, the application and network controller19 may create multiple identical instances 10, 11, 12, also called instances 10, 11, 12, of the control application type *t* either VMs or containers hosting the plant-operator-provided control application. All the created instances 10, 11, 12may keep their own state, and control the field devices 2 at the same time based on the same control logic. The instances 10, 11, 12may not be aware of the existence of the other instances 10, 11, 12and the controlled field devices 2 "sees" only one control application. This abstraction is ensured by an enhanced network proxy device 23.

The network proxy device 23 belongs to the network part of the system 1. The network 3 may comprise two different types of networking devices: networking switches/routers i.e., forwarding switch 13 in state-of-the-art, and the network proxy device 23.

The network proxy device 23 may be implemented on programmable networking devices such as P4 enabled switches or on programmable network 3 card interfaces (NICs) that may be part of servers in the server pool 6. The network proxy device 23 must exist on the path between field device 2 and the server pool 6.

When application and network controller 19 finds the path for the intent, it makes sure that there is one network proxy device 23 on the path. In details, network proxy device 23 may implement the following features.

In a direction from field device 2 to the server pool 6 it may provide packet replication for the desired connections in the direction from the field device 2 towards server pool 6 that contains instances of the control applications. For example, in Fig. 6 the network proxy device 23 B may create three replicated status update messages of the status update message 20 and forwards them to the three different instances of the control application 10, 11, 12. These replicated status update messages 22 may contain the same payload/information in the status data.

Since the instances of the control application 10, 11, 12 run the same control plane logic, have the same initial state, and the status update messages 20 are never lost, their control messages 21 may contain the same control data. Therefore, the payloads in the control messages 21 generated from the replicated status update messages 222 towards the network proxy device 23 may be the same. Using the approach, there is no need for state-replication mechanisms between different instances 10, 11, 12 of the control application, since the input to all instances 10, 11, 12 are similar, different instances 10, 11, 12 have the same state. When replicating the replicated status update messages 22, if needed, network proxy device 23 may also generate a new packet header and re-write the specific fields in the replicated status update messages 22 coming from the field device 2 e.g., setting a new destination MAC address in the replicated status update messages 20. In case of layer four communication (e.g., UDP/TCP), the network proxy device 23 may terminate the connection coming from the field device 2 to the network proxy device 23, and open multiple replicated connections towards the instances 10, 11, 12 of the control application.

In a direction from the server pool 6 to the field device 2: In the direction from the control plane applications towards the field devices 2, network proxy device 23 may collect the control messages 21 containing the control data generated by the multiple instances 10, 11, 12 of the control application. After receiving them, network proxy device 23 may compare them, and may perform a consensus-based decision making procedure. That is, it forwards only a single consensus control message 27 containing the consensus control data. Therefore, even if one control message 21 is corrupted, the network proxy device 23 may select the correct control message 21 from the instances of the control application in real- time and forward it to the field device 2. This ensures the high-availability with no downtime and is also transparent from the field device 2.

In case of inconsistency in the received control messages 21, or when the consensus is not reached, network proxy device 23 may fire an alarm by sending an error message 29.

Network proxy device 23 operations may be done in hardware, therefore, it may happen in real-time with negligible and bounded processing time. Network proxy device 23 may provide simple forwarding same as forwarding switch 13 for selected flows and keep the special behavior for other selected flows.

A proxy configurator 25 of the orchestrator module 4 may configure the network proxy device 23 on the path of the intent based on the output of the control application availability component 26 and application and network controller 19. In details, proxy configurator 25 may configure a number of packet replications that network proxy device 23 must do. Moreover, proxy configurator 25 may configure to what addresses the network proxy device 23 should forward the replicated status update message 22 to.

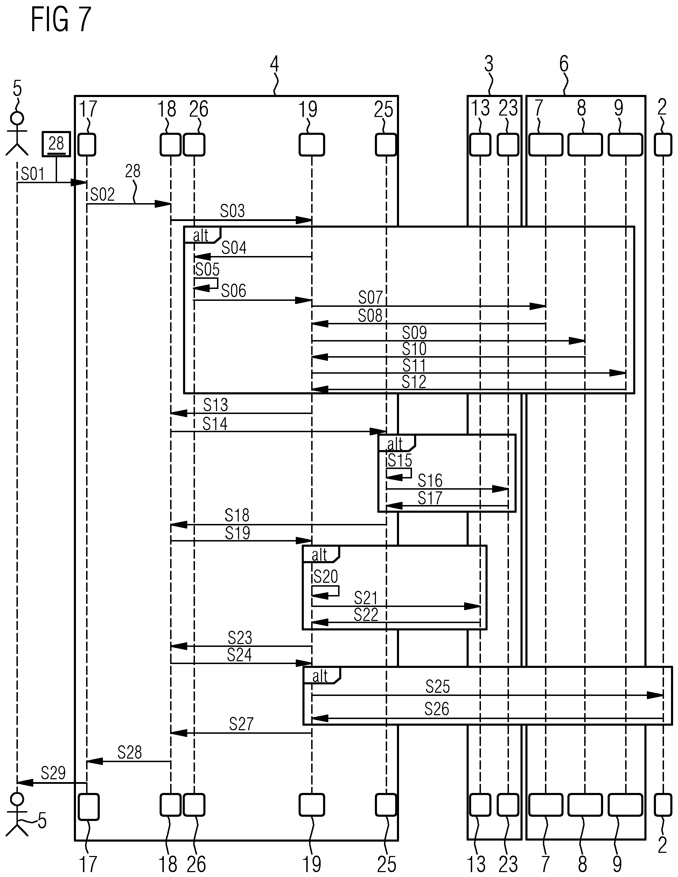

FIG 7 shows a method of operating a system for controlling a field device.

The proposed method of operating a system 1 for controlling a field device 2 is explained in four sequence diagrams. FIG 7 shows an intent admission presenting how the intent is admitted to the network 3 and how the configurations are applied.

Same as state-of-the-art, the sequence diagram starts with plant operator 5 sending the intent request message 28 to service manager 18 through user interface 17 in steps S01 - S02.

Then service manager 18 asks application and network controller 19 to perform server pool 6 configuration in step S03. In step S04, application and network controller 19 asks instance of the control application availability component 26 for the number of needed instances 10, 11, 12 of the control application to realize the required availability of the user intent. After calculation of this number by the control application availability component 26 at step S05, the control application availability component 26 informs application and network controller 19 in step S06 with the number of instances 10, 11, 12 to launch. Then, application and network controller 19 launches,in the example, the first instance of the control application 10 on first server 7, the second instance of the control application 11 on second server 8, and the third instance of the control application 12 on third server 9 , to run in parallel in steps S07-S12.

Then, in step S13, application and network controller 19 may notify service manager 18 that the server pool 6 configuration is done, and the instances 10, 11, 12 are created. Then, in step S14, service manager 18 may ask proxy configurator 25 to run the proxy configuration procedure. Through steps S15-S17, the proxy configurator 25 may calculate the necessary proxy rules e.g., based on number of instances 10, 11, 12 and their network 3 address, and may configures these rules on the network proxy device 23. In step S18, proxy configurator 25 may notify service manager 18 that the proxy configuration has been successfully done. In step S19, service manager 18 may ask application and network controller 19 to configure the network 3. In step S20, the application and network controller 19 calculates the network 3 path for the intent and based on the calculation results, the application and network controller 19 may configure the forwarding switches 13 in steps S21 - S22. In S23, the application and network controller 19 may inform service manager 18 that the network 3 configuration is successful.

Finally, service manager 18 may request application and network controller 19 to configure the field device 2 in step S24. In steps S25-S26, the application and network controller 19 may configure the field device 2. Then application and network controller 19 may notify service manager 18 in step S27 about the successful field device 2 configuration. Through steps S28 - S29, service manager 18 may notify user interface 17 and the user interface 17 may show a prompt to plant operator 5 with a successful intent embedding message. Up to now, the intent is successfully embedded into the network 3.

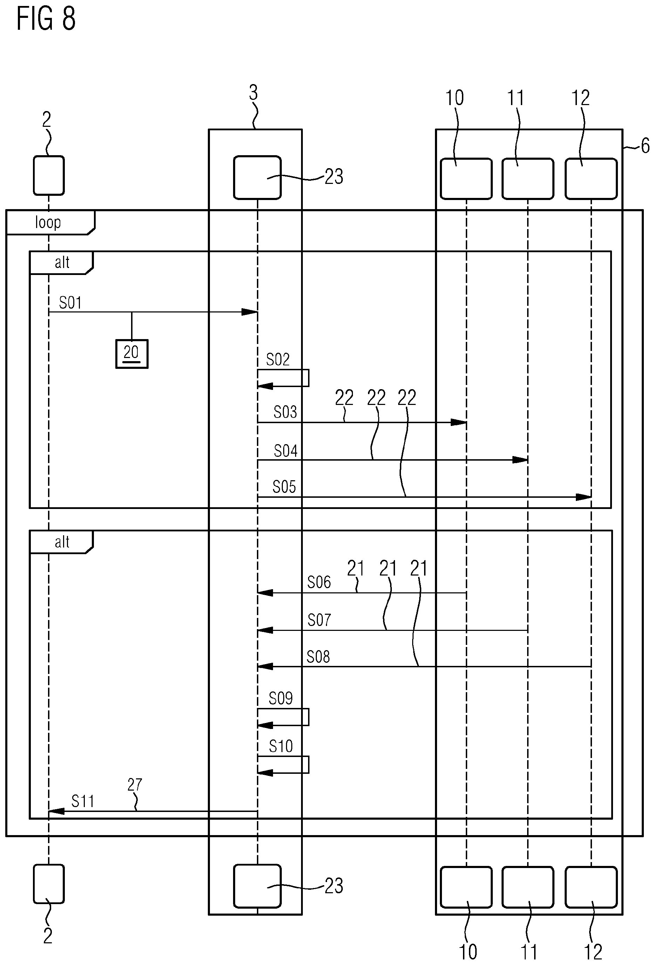

FIG 8 shows a method of operating a system for controlling a field device.

The sequence diagram in FIG 8, shows the network 3 operation phase. This diagram shows the closed-loop control application which may have two main parts:

field device 2 to control application traffic : In this case, in every control cycle time, the field device 2 device may send the status update message 20 "S" to the control application, e.g., using UDP protocol with a unique destination address. This traffic should pass through the network proxy device 23 (step S01). When network proxy device 23 receives the status update message 20 from field device 2, it duplicates the received packets and encapsulates it with each instance of the control application 10, 11, 12address (in step S02), and sends the replicated status update message 22 the first instance of the control application 10, second instance of the control application 11, third instance of the control application 12 through steps S03 - S05, respectively.

Each of these application instances 10, 11, 12 receives the replicated status update message 22 and process it in parallel and prepare the output control message 21. This indicates that the instances 10, 11, 12 will always have the same state, therefore, state synchronization mechanism is not needed. Thus, this approach is applicable to any control application implementation.

control application to field device 2 traffic After the output control message 21 is calculated by each application instance 10, 11, 12, each of them sends the control message 21 "C" to the field device 2 (steps S06 - S08). These control messages 21 will be routed to the field device 2 through the network proxy device 23. In step S09, network proxy device 23 checks the value of the control message 21 based on the consensus of the received control messages 21. Many consensus algorithms exist, with different implementation and reasonings. For instance, using in Byzantine Fault Tolerance (BFT) algorithm, the general rule of thumb is that more than $\lceil 1/2 \rceil$ of application instances need to agree on the correct value of control message 21. In this way, any failures in less than 50% of the application instances 10, 11, 12 and network outages are covered by the network proxy device 23 consensus algorithm.

However, in Fig. 8, all three application instances 10, 11, 12 send the same control message 21 "C". Thus, in step S10, the agreement on the consensus control message 27 is reached. Thus, the network proxy device 23 drops two control messages 21, and only forwards one correct control message 21 to the field device 2 (step S11).

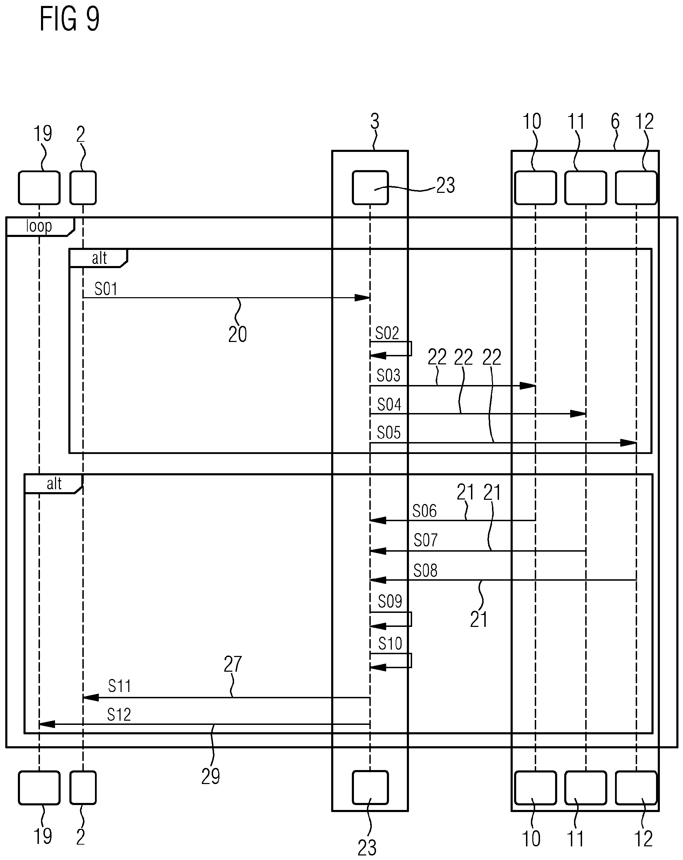

FIG 9 shows a method of operating a system for controlling a field device.

Fig. 9 shows where there is a failure in one instance 11 out of three instances of the control application 10, 11, 12. In this case, first instance 10 of the control application and third instance 12 of the control application may send control message 21 "C" and second instance 12 of the control application may send "D". Therefore, the consensus may be reached for correct value of control message 21 "C". Thus, the network proxy device 23 may send the consensus control message 27 "C" to field device 2 in step S11. Also, the network proxy device 23 may sends an error message 29to application and network controller 19 in step S12, raising an alarm for failure in third instance of the control application or its network path.

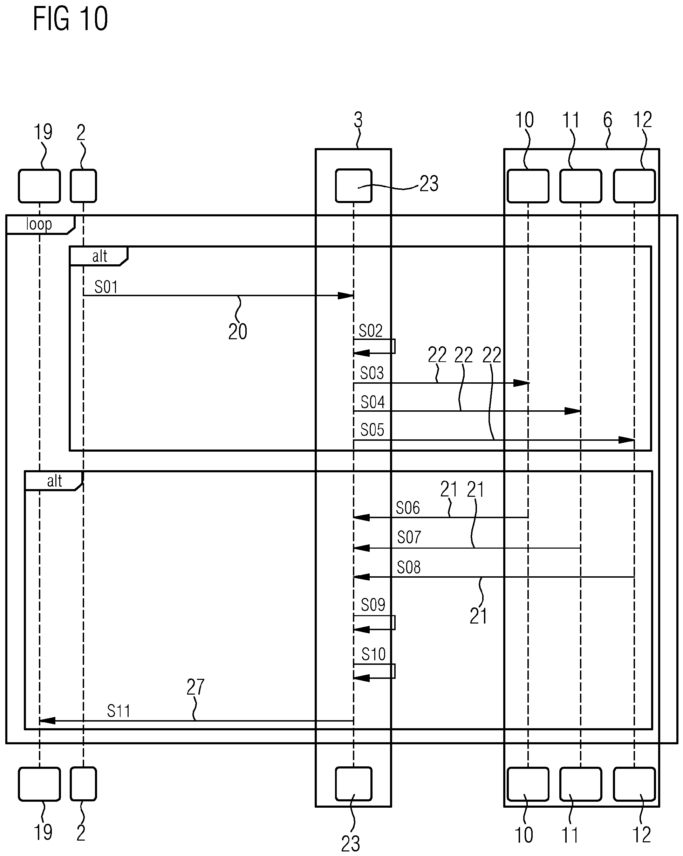

FIG 10 shows a method of operating a system for controlling a field device.

Fig. 10 shows the case where the consensus cannot be made due to a major failure. In steps S06 - S08, the instances of the control application error message send different outputs: control message 21 "C", "D", and "E". In this case, the consensus algorithm fails to reach an agreement, and thus, it may alert and notify application and network controller 19 for a major failure. Note that network proxy device 23 does the packet duplication for field device 2 to control application direction, and packet drop and consensus check for control application to field device 2 direction in hardware. Therefore, the processing time of network proxy device 23 operations may be considered negligible.

Compared to the state-of-the-art mechanism, the proposed method provides the following advantages. The method significantly increases the reliability of network 3 and reduces the outage costs on the production line. State-of-the-art vPLC redundancy method causes service downtime, while the approach causes no service downtime and provides seamless redundancy. State-of-the-art vPLC redundancy mechanisms requires state synchronization between vPLCs or even hardware PLCs. The state synchronization might not be available on all (v)PLC implementations. Also, the state synchronization might not be consistent, especially when the rate of state change is too fast.

However, in the proposed approach, vPLCs are not required to support state synchronization. The state-of-the-art vPLC redundancy methods do not support vPLC-level error detection. Thus, if there is a bug in vPLC software or its container/VM instance, it will remain undetected. However, the approach detects software-level errors. State-of-the-art vPLC redundancy methods do not cover network 3 outages/errors resulting in missing packets or wrong packets. However, the approach supports detecting those errors. In contrast to state-of-the-art, the approach does not need support from field device 2 devices. The approach provides a flexible redundancy using in-network 3 processing which is available in programmable p4 switches, or smartNICs on commodity servers. The approach may work not only for vPLCs, but for other control applications as well as IT services, such as web servers, etc.

List of Reference

1   system
2   field device
3   network
4   orchestrator module
5   plant operator
6   server pool
7   first server
8   second server
9   third server
10  first instance of control application

11 second instance of control application
12 third instance of control application
13 forwarding switch
14 data plane
15 control plane
16 active connection
17 user interface
18 service manager
19 application and network controller
20 status update message
21 control message
22 replicated status update message
23 network proxy device
24 fourth server
25 proxy configurator
26 control application availability component
27 consensus control message
28 intent request message
29 error message

**Claims**

1. A system (1) for controlling a field device (2), wherein

   - the system (1) comprises a server pool (6) comprising servers (7, 8, 9) for operating instances of a virtual control application (10, 11, 12) assigned to the field device (2), wherein the instances of the virtual control application (10, 11, 12) operate in parallel;
   - the system (1) comprises a network proxy device (23), wherein the network proxy device (23) is configured to receive a status update message (20) from the field device (2), comprising status data, and to send replicated status update messages (22) comprising the status data to each instance of the virtual control application (10, 11, 12) assigned to the field device (2);
   - each of the instances of the virtual control application (10, 11, 12) is configured to evaluate control data based on the status data and to send a respective control message (21) comprising the control data evaluated by the respective instance of the virtual control application (10, 11, 12) to the network proxy device (23); and
   - the network proxy device (23) is configured to receive the respective control messages (21) of each of the instances of the virtual control application (10, 11, 12) and to perform a consensus-based decision making procedure to evaluate consensus control data based on the control data provided by the instances of the virtual control application (10, 11, 12) and to send a consensus control message (27)comprising the consensus control data to the field device (2).

2. The system (1) according to claim 1, **characterized in that**, the network proxy device (23) is configured to determine the control data of at least one of the instances of the virtual control application (10, 11, 12) as the consensus control data when the control data of each of the respective control messages (21) are consistent.

3. The system (1) according to claim 1 or 2, **characterized in that**, the network proxy device (23) is configured to determine the consistent control data of at least one of the instances of the virtual control application (10, 11, 12) as the consensus control data when the control data of at least one control messages (21) is inconsistent.

4. The system (1) according to any one of the preceding claims, **characterized in that**, the network proxy device (23) is configured to block the transmission of the consensus control message (27)to the field device (2) when the consensus-based decision making procedure fails.

5. The system (1) according to any one of the preceding claims, **characterized in that**, the network proxy device (23) is configured to send an error message (29) when a least one of the control data of the respective control messages (21) is inconsistent with another control data of the respective control response messages (21) and/or the consensus-based decision making procedure fails.

6. The system (1) according to any one of the preceding claims, **characterized in that**, the system (1) comprises an orchestrator module (4), configured to

   - receive an intent request message (28) comprising an intent to control the field device (2) with a virtual control application;
   - control the server pool (6) to set up the instances of the virtual control application (10, 11, 12) assigned to the field device (2) as a function of the intent;
   - control the network (3) to connect the instances of the virtual control application (10, 11, 12) to the field device (2) via the network proxy device (23); and
   - configure the proxy configuration of the network proxy device (23) to assign the instances of the virtual control application (10, 11, 12) to the field device (2).

7. Method to operate a system (1) for controlling a field device (2), comprising the following steps:

   - receiving a status update message 820) from the field device (2), comprising status data, by a network proxy device (23) of the system (1),
   - sending replicated status update messages (22) comprising the status data to each instance of a virtual control application (10, 11, 12) assigned to the field device (2) operated by servers (7, 8, 9) of a server pool (6) in parallel;

- evaluating control data based on the status data by each of the instances of the virtual control application (10, 11, 12) and sending respective control messages (21)comprising the control data to the network proxy device (23);

- receiving by the network proxy device (23) the control messages (21) of each of the instances of the virtual control application (10, 11, 12) and performing a consensus-based decision making procedure to evaluate consensus control data based on the control data provided by the instances of the virtual control application (10, 11, 12);

- sending a consensus control message (27) comprising the consensus control data to the field device (2) by the network proxy device (23).

8. Method to configure a system (1) for controlling a field device (2), comprising the following steps:

- receiving an intent request message (28) comprising an intent to control the field device (2) with a virtual control application by an orchestrator module (4);

- controlling by the orchestrator module (4) the server pool (6) to set up instances of the virtual control application (10, 11, 12) assigned to the field device (2) as a function of the intent;

- controlling by the orchestrator module (4) the network (3) to connect the instances of the virtual control application (10, 11, 12)to the field device (2) via the network proxy device (23);

- configuring a proxy configuration of the network proxy device (23) to assign the instances of the virtual control application (10, 11, 12) to the field device (2).

FIG 1

EP 4 647 913 A1

FIG 2

FIG 3

EP 4 647 913 A1

FIG 4

# FIG 5

FIG 6

# FIG 7

## FIG 9

FIG 10

Europäisches
Patentamt
European
Patent Office
Office européen
des brevets

# EUROPEAN SEARCH REPORT

**Application Number**

EP 24 17 4540

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/404798 A1 (FISHER-ROSEMOUNT SYSTEMS, INC.) 22 December 2022 (2022-12-22) * abstract * * paragraphs [0005], [0014], [0016], [0019] - [0020], [0078] - [0079], [0096], [0105], [0142], [0148], [0149], [0152] * * paragraphs [0168] - [0169], [0200], [0207], [0208] * * figures 1,3 * | 1-8 | INV. G06F9/50 |
| A | US 2023/120522 A1 (SOPHOS LIMITED) 20 April 2023 (2023-04-20) * the whole document * | 1-8 | |
| A | US 2024/080277 A1 (ORACLE INTERNATIONAL CORPORATION) 7 March 2024 (2024-03-07) * the whole document * | 1-8 | |
| | | | **TECHNICAL FIELDS SEARCHED (IPC)** |
| | | | G06F |

The present search report has been drawn up for all claims

| Place of search | Date of completion of the search | Examiner |
|---|---|---|
| The Hague | 8 October 2024 | Tomàs Blanch, F |

EPO FORM 1503 03.82 (P04C01)

## ANNEX TO THE EUROPEAN SEARCH REPORT
## ON EUROPEAN PATENT APPLICATION NO.

EP 24 17 4540

This annex lists the patent family members relating to the patent documents cited in the above-mentioned European search report.
The members are as contained in the European Patent Office EDP file on
The European Patent Office is in no way liable for these particulars which are merely given for the purpose of information.

08-10-2024

| Patent document cited in search report | Publication date | Patent family member(s) | Publication date |
|---|---|---|---|
| US 2022404798 A1 | 22-12-2022 | CN 115480537 A | 16-12-2022 |
| | | DE 102022114301 A1 | 22-12-2022 |
| | | GB 2610030 A | 22-02-2023 |
| | | JP 2022192060 A | 28-12-2022 |
| | | US 2022404798 A1 | 22-12-2022 |
| US 2023120522 A1 | 20-04-2023 | EP 4420300 A1 | 28-08-2024 |
| | | US 2023117962 A1 | 20-04-2023 |
| | | US 2023119503 A1 | 20-04-2023 |
| | | US 2023120522 A1 | 20-04-2023 |
| | | US 2023120785 A1 | 20-04-2023 |
| | | US 2023121834 A1 | 20-04-2023 |
| | | US 2023123781 A1 | 20-04-2023 |
| | | US 2023216685 A1 | 06-07-2023 |
| US 2024080277 A1 | 07-03-2024 | US 2024080242 A1 | 07-03-2024 |
| | | US 2024080277 A1 | 07-03-2024 |
| | | US 2024314088 A1 | 19-09-2024 |

EPO FORM P0459

For more details about this annex : see Official Journal of the European Patent Office, No. 12/82